**Europäisches Patentamt**

**European Patent Office**

**Office européen des brevets**

(11) Veröffentlichungsnummer: **0 313 049 B1**

(19)

(12) **EUROPÄISCHE PATENTSCHRIFT**

(45) Veröffentlichungstag der Patentschrift: **15.04.92**

(21) Anmeldenummer: **88117492.4**

(22) Anmeldetag: **20.10.88**

(51) Int. Cl.⁵: **B23H 7/04**, B23H 1/02

(54) **Vorrichtung zum elektroerosiven Werkstückbearbeiten.**

(30) Priorität: **21.10.87 DE 3735656**

(43) Veröffentlichungstag der Anmeldung:
**26.04.89 Patentblatt 89/17**

(45) Bekanntmachung des Hinweises auf die
Patenterteilung:
**15.04.92 Patentblatt 92/16**

(84) Benannte Vertragsstaaten:
**CH DE FR GB IT LI**

(56) Entgegenhaltungen:

**PATENT ABSTRACTS OF JAPAN, unexamined applications, Sektion M, Band 8, Nr. 152, 14 Juli 1984 THE PATENT OFFICE JAPANESE GOVERNMENT Seite 37 M 309**

**PATENT ABSTRACTS OF JAPAN, unexamined applications, Sektion M, Band 11, Nr. 380, 11 Dezember 1987 THE PATENT OFFICE JAPANESE GOVERNMENT Seite 146 M 650**

**PATENT ABSTRACTS OF JAPAN; unexamined applications, Sektion M, Band 8, Nr. 180, 18, August 1984 THE PATENT OFFICE JAPANESE GOVERNMENT Seite 149 M 318**

**PATENT ABSTRACTS OF JAPAN, unexamined applications, Sektion M, Band 10, Nr 218, 30. Juli 1986 THE PATENT OFFICE JAPANESE GOVERNMENT Seite 105 M 503**

(73) Patentinhaber: **AG für industrielle Elektronik AGIE Losone bei Locarno**

**CH-6616 Losone/Locarno(CH)**

(72) Erfinder: **Marsicovetere, Roland**

**CH-6670 Avegno(CH)**
Erfinder: **Bühler, Ernst**
**Salita degli Orti, 5**
**CH-6616 Losone(CH)**

(74) Vertreter: **EGLI-EUROPEAN PATENT ATTORNEYS**
**Widenmayerstrasse 5**
**W-8000 München 22(DE)**

EP 0 313 049 B1

**Beschreibung**

Die Erfindung betrifft eine Vorrichtung zum elektroerosiven Werkstückbearbeiten gemäß dem Oberbegriff der Ansprüche 1, 2 und 3.

Insbesondere betrifft die Erfindung eine Vorrichtung zum erosiven Werkstückbearbeiten, die einerseits mit hohen Stromimpulsen zum Erzeugen eines Vollschnittes oder Grobschnittes des Werkstückes und andererseits mit vergleichsweise niedrigen Stromimpulsen für die Feinschnittbearbeitung des Werkstückes arbeitet. Bei einer bekannten Vorrichtung zum erosiven Werkstückbearbeiten, wie sie durch die Anmelderin gefertigt wird, werden die hohen Stromimpulse von einer ersten Stromquelle über ein sogenanntes Vollschnittkabel zu einer Erosionsvorrichtung zugeführt, die üblicherweise die Form eines Erosionsschneiddrahtes hat. Die vergleichsweise niedrigen Stromimpulse werden von einer zweiten Stromquelle erzeugt, die über ein sogenanntes Feinschnittkabel ebenfalls mit der Erosionsvorrichtung in Verbindung steht. Bei der bekannten Vorrichtung stehen während der erosiven Bearbeitung des Werkstückes sowohl das Vollschnittkabel als auch das Feinschnittkabel ständig elektrisch mit der Erosionsvorrichtung in Verbindung. Oberflächenanalysen der bearbeiteten Werkstücke haben ergeben, daß die Oberflächenrauigkeit, die bei der bekannten Vorrichtung durch die Feinbearbeitung bzw. Feinschnittbearbeitung erzielt werden kann, noch nicht den extremen Anforderungen an die Feinheit der Oberflächen genügt, wie sie heutzutage immer häufiger verlangt werden. Insbesondere hat es sich bei der bekannten Vorrichtung als problematisch erwiesen, eine Oberflächenrauigkeit mit den Kennwerten $R_a<0.1\ \mu m$ und $R_y<1\mu m$ zu erzielen.

Aus der JP-A-62-152 618 ist eine Vorrichtung der eingangs genannten Art bekannt, bei der eine Umschaltung von Vollschnittbearbeitung Zu Feinschnittbearbeitung dadurch herbeigeführt wird, daß das Vollschnitt- und das Feinschnittkabel jeweils eigene Schleifkontakte für die Kontaktierung der Laufdrahtelektrode haben, wobei Rollen einer Transportvorrichtung so nach der einen oder anderen Seite auslenkbar sind, daß die Laufdrahtelektrode jeweils nur die Schleifkontakte des Feinschnitt- oder des Vollschnittkabels berühren. Nun ist es aber nachteilig, in Längsrichtung der Laufdrahtelektrode versetzt angeordnete Schleifkontakte zu verwenden, da sich je nach kontaktiertem Schleifkontakt eine unterschiedliche Auslenkung der Laufdrahtelektrode ergibt, was die Schneidgenauigkeit ungünstig beeinflußt. Außerdem ist es allgemein wünschenswert, die Stromzuführung zur Laufdrahtelektrode möglichst nahe dem Arbeitsspalt anzuordnen, was bei versetzt angeordneten Schleifkontakten nicht möglich ist.

Aus der JP-A-59-73 226 ist eine ähnliche Vorrichtung bekannt, bei der eine Ader des Vollschnittkabels während einer Feinschnittbearbeitung durch eine magnetische Unterbrechungsvorrichtung elektrisch von der Laufdrahtelektrode abgetrennt wird. Dies hat jedoch den Nachteil, daß die magnetische Unterbrechungsvorrichtung bei den zu schaltenden hohen Strömen von mehreren 100A recht große Abmessungen haben muß und damit nicht beliebig nahe am Arbeitsspalt angeordnet werden kann, womit wieder gewisse Zuleitungslängen des Vollschnittkabels als kapazitive Last wirksam sind.

Die WO 87/05 242-A zeigt eine ähnliche Vorrichtung mit Vollschnitt- und Feinschnittkabel, wobei die Stromzuführung des Vollschittkabels als verschieblicher Schleifkontakt ausgebildet ist. Zusätzlich sind beide Kabel nahe der Stromquelle noch jeweils durch einen einpoligen Schalter abtrennbar. Auch hier hat man wieder den Nachteil von zwei in Längsrichtung der Laufdrahtelektrode angeordneten Schleifkontakten.

Aus JP-A-61-568 28 ist schließlich eine Elektroerosionsmaschine bekannt, die über eine Mehrzahl von Stromquellen verfügt, welche über zugeordnete Schalter und an diese Schalter angeschlossene, voneinander unabhängige Kabel verfügt. Die einzelnen Schalter sind als Schalttransistoren ausgebildet und an die jeweiligen Kabel an den den Stromquellen zugewandten Enden angeschlossen. Somit stehen sämtliche Kabel über einen Großteil ihrer Länge ständig in Kontakt mit der Laufdrahtelektrode, wobei vor allem das Vollschnittkabel während einer Feinbearbeitung als- kapazitive Last wirkt.

Gegenüber diesem Stand der Technik liegt der Erfindung die Aufgabe zugrunde, die gattungsbildende Vorrichtung derart weiter zu bilden, daß die erzielbare Oberflächengüte und Schneidgenauigkeit bei der Feinschnittbearbeitung des Werkstückes weiter erhöht werden.

Lösungen dieser Aufgabe sind bei der gattungsgemäßen Vorrichtung jeweils durch die im kennzeichnenden Teil der Ansprüche 1, 2 und 3 genannten Merkmale angegeben.

Durch die mehrpolige elektrische Trennung des Vollschnittkabels zumindest über einen Großteil seiner Länge oder in seiner Gesamtheit während der Feinschnittbearbeitung werden Stöhrungen durch kapazitive Lasten vollständig eliminiert. Gleichwohl erhält man eine einfach aufgebaute Vorrichtung mit geringem Platzbedarf. Ferner wird die Auslenkung der Drahtelektrode nicht von der Umschaltung beeinflußt, wie es bei den mit beweglichen Stromzuführungen arbeitenden Vorrichtungen der Fall ist.

Die spezielle Lösung der Aufgabe, wie sie im Anspruch 1 angegeben ist, nämlich die Trennvorrichtung zur elektrischen Trennung als pneumatisch oder hydraulisch gesteuerten Schalter auszubilden, weist einen besonderen Vorteil auf, der darin liegt, daß sich eine besonders geringe Baugröße erhalten läßt und keine Steuerleitungen in die Nähe des Arbeitsspaltes gelegt werden müssen, wo sie Störungen durch die elektrischen Arbeitsimpulse ausgesetzt sind und gegenüber der elektrischen Arbeitsflüssigkeit vollständig abgedichtet sein müssen.

Bei Elektroerosionsmaschinen ist es üblich, ein Referenzkabel vorzusehen, das für eine Servoregelung dient. Dieses Referenzkabel hat eine erste Ader für die Massenverbindung und eine zweite Ader für den Potentialabgriff an dem dem Schleifkontakt zugewandten Ende des Vollschnittkabels. Durch die Abtrennung des Referenzkabels gemäß den Merkmalen des Anspruches 4, läßt sich eine weitere Verbesserung der Bearbeitungsgenauigkeit erzielen, da das Referenzkabel ebenfalls eine kapazitive Last darstellt. Durch die elektrische Abtrennung des Referenzkabels fehlt zwar dem Servokreis die für eine Regelung erforderliche Information. Bei der Feinschnittbearbeitung kann jedoch auf diese Information verzichtet werden, ohne daß es zu Fehlern bei der Bearbeitung kommt.

Gute Arbeitsgeschwindigkeiten bei der Vollschnittbearbeitung einerseits und hohe Oberflächengüten bei der Feinschnittbearbeitung andererseits lassen sich mit den Dimensionierungsangaben im Kennzeichen des Anspruches 5 erzielen.

Nachfolgend werden unter Bezugnahme auf die beiliegenden Zeichnungen bevorzugte Ausführungsformen der Erfindung näher erläutert. Es zeigen:

Fig. 1 Eine Ausgestaltung der erfindungsgemäßen Vorrichtung zum erosiven Werkstückbearbeiten mit einer als Relais ausgeführten Trennvorrichtung;

Fig. 2 eine zweite Ausgestaltung der erfindungsgemäßen Vorrichtung zum erosiven Werkstückbearbeiten mit einer durch halbleitende Elemente gebildeten elektrischen Trennvorrichtung;

Fig. 3 ein Prinzipschaltbild eines pneumatisch oder hydraulisch steuerbaren elektrischen Schalters.

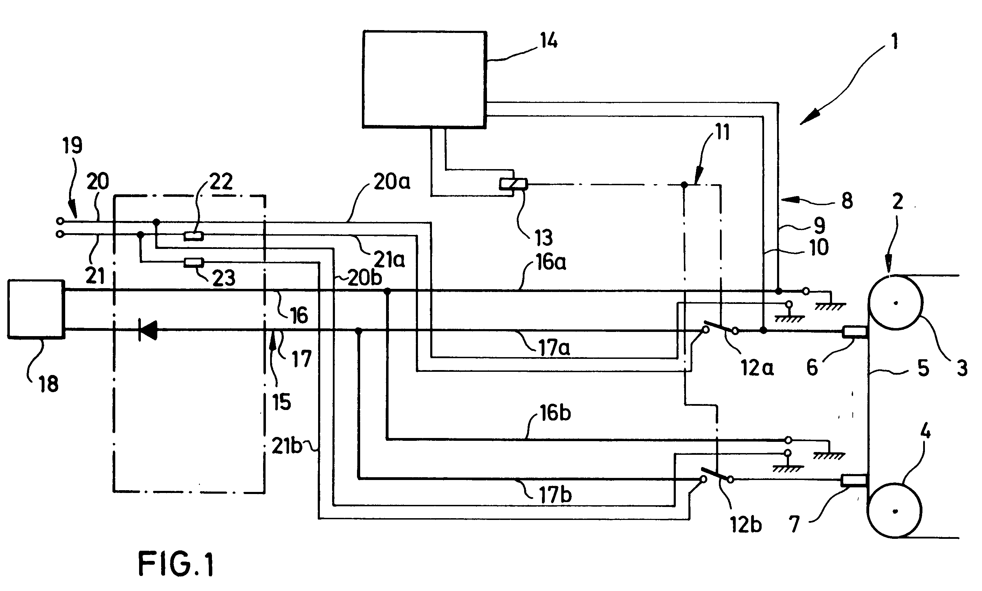

Wie in Fig.1 schematisch dargestellt ist, weist eine Vorrichtung zum erosiven Werkstückbearbeiten, die in ihrer Gesamtheit mit dem Bezugszeichen 1 bezeichnet ist, eine Erosionsvorrichtung 2 auf. Die Erosionsvorrichtung 2 umfaßt ihrerseits eine erste Rolle 3 und eine zweite Rolle 4, über die eine Drahtelektrode 5 geführt wird. Die Erosionsvorrichtung 2 sowie die mechanische Ausgestaltung der Vorrichtung zum erosiven Werkstückbearbeiten bedürfen keiner näheren Erläuterung, da sie an sich aus dem Stand der Technik bekannt sind.

Bei dem in Fig.1 gezeigten Ausführungsbeispiel wird die Drahtelektrode 5 über einen ersten Schleifkontakt 6 sowie über einen zweiten Schleifkontakt 7 mit einem negativen Potential beaufschlagt. Das zu bearbeitende Werkstück, das in der Figur nicht dargestellt ist, wird seinerseits mit dem positiven oder Massepotential beaufschlagt. Die beschriebene Polarität der Elektrode gegenüber dem Werkstück stellt die bei der Erosionstechnik übliche Polarität dar. Jedoch kann auch mit der umgekehrten Polarität der Elektrode gegenüber dem Werkstück gearbeitet werden.

Ein Feinschnittkabel 8 weist eine erste Ader 9 auf, die an die Masse der Vorrichtung zum erosiven Werkstückbearbeiten angeschlossen ist, sowie eine zweite Ader 10 auf, die mit dem ersten Schleifkontakt 6 in Verbindung steht. Das Feinschnittkabel 8 mit seinen beiden Adern 9, 10 ist an eine Feinschnittstromquelle 14 angeschlossen, die zu einer Feinschnittbearbeitung oder Feinbearbeitung des Werkstückes mit niedrigen Strömen dient.

Eine Vollschnitt-Stromquelle 18 ist an ein Vollschnittkabel 15 angeschlossen, das eine erste Ader 16 und eine zweite Ader 17 aufweist. Die erste Ader 16 spaltet sich in eine erste und zweite Teilader 16a, 16b auf, die an die Masse der Vorrichtung 1 zum erosiven Werkstückbearbeiten angeschlossen sind. Die zweite Ader 17 teilt sich in eine dritte und vierte Teilader 17a, 17b auf, die ihrerseits an bewegliche Schaltelemente 12a, 12b eines Relais 11 angeschlossen sind. Die beweglichen Schaltkontakte 12a, 12b stehen mit dem ersten und zweiten Schleifkontakt 6, 7 in Verbindung.

Das Relais 11 umfaßt ferner eine Betätigungswicklung 13 für das Öffnen und Schließen der beiden Schaltkontake 12a, 12b. Die Betätigungswicklung 13 ist an die Feinschnitt-Stromquelle 14 angeschlossen und dient zum Öffnen der beweglichen Schaltkontakte 12a, 12b während der Zeitdauer der Feinbearbeitung oder Feinschnittbearbeitung des Werkstückes, als während der Zeitdauer der Erzeugung des niedrigen Stromes für die Feinschnittbearbeitung durch die Feinschnitt-Stromquelle 14.

Die beweglichen Schaltkontakte 12a, 12b sind derart angeordnet, daß ein Großteil der Länge des Vollschnittkabels 15 oder dessen Gesamtheit zwischen den Schaltkontakten 12a, 12b und der Vollschnitt-Stromquelle 18 liegt, während allenfalls ein verglichen hiermit sehr kurzer Teil der Länge des Vollschnittkabels zwischen den beweglichen Schaltkontakten 12a, 12b und den beiden Schleifkontakten 6, 7 liegt.

Wie bei Vorrichtungen zum erosiven Werkstückbearbeiten allgemein üblich, ist ferner ein sogenanntes Referenzkabel 19 vorgesehen, das für eine Servoregelung der Vorrichtung 1 dient. Das Referenzkabel 19 hat eine erste Ader 20 für die Masseverbindung sowie eine zweite Ader 21 für den Abgriff des Potentials am Schleifkontakt-Seitenende des Vollschnittkabels 15. Die erste Ader 20 des Referenzkabels 19 teilt sich in eine erste und zweite Referenzteilader 20a, 20b auf, die mit der Masse der Vorrichtung 1 zum erosiven Werkstückbearbeiten verbunden sind. Die zweite Ader 21 teilt sich über Vorwiderstände 22, 23 in eine dritte Referenzteilader 21a und eine vierte Referenzteilader 21b, die jeweils an der den Schleifkontakten 6, 7 abgewandten Seite der beweglichen Schaltkontakte 12a, 12b an die dritte und vierte Teilader 17a, 17b des Vollschnittkabels 15 angeschlossen sind.

Während der Grobbearbeitung des Werkstückes bzw. Grobschnittbearbeitung des Werkstückes wird die Betätigungswicklung 13 von der Feinschnitt-Stromquelle 14 nicht erregt. Damit sind die Schaltkontakte 12a, 12b in ihrem geschlossenen Zustand. Die Vollschnitt-Stromquelle 18 steht in diesem Schaltzustand über ihre dritte und vierte Teilader 17a, 17b mit dem ersten und zweiten Schleifkontakt 6, 7 in Verbindung und beaufschlagt diese Kontakte 6, 7 mit einem hohen Erosionsstrom. In diesem Bearbeitungszustand stehen sowohl das Feinschnittkabel 8 als auch das Vollschnittkabel 15 mit der Drahtelektrode 5 über die Schleifkontakte 6, 7 in Verbindung.

Wenn jedoch eine Feinschnittbearbeitung oder Feinbearbeitung des Werkstückes durchgeführt werden soll, wird die Feinschnitt- Stromquelle aktiviert, die die Betätigungswicklung 13 erregt und somit die beweglichen Schaltkontakte 12a, 12b öffnet. In diesem Schaltzustand ist das Vollschnittkabel 15 von der Drahtelektrode 5 der Erosionsvorrichtung 2 ebenso abgetrennt wie das Referenzkabel 19, so daß durch das Vollschnittkabel 15 oder das Referenzkabel 19 hervorgerufene Störungen nicht bis zur Drahtelektrode 5 vordringen können und somit nicht die erzielbare Oberflächengüte bei der Feinbearbeitung des Werkstückes beeinträchtigen können.

Die Feinschnitt-Stromquelle 14 ist ein sog. VHP-Modul, also ein Schaltungsmodul für die hochgenaue Feinschnittbearbeitung (VHP = Very high precision).

Das Vollschnittkabel 15 ist ein Kabel mit einem hohen Kapazitätsbelag, während das Feinschnittkabel 8 ein Kabel mit einem niedrigen Kapazitätsbelag ist. Beide Kabel können induktivitätsarm ausgeführt sein bzw. eine für Elektroerosion übliche Eigeninduktivität haben.

Die Vollschnitt-Stromquelle 18 erzeugt negative Stromimpulse in der Größenordnung von 60 A bei einer Leerlaufspannung in der Größenordnung von 300 V und einer Brennspannung in der Größenordnung von 20 V. Demgegenüber sind die von der Feinschnitt-Stromquelle 14 erzeugten negativen Stromimpulse in der Größenordnung von 0,3 bis 1 A bei einer Leerlaufspannung in der Größenordnung von 30 bis 100 V und einer Brennspannung in der Größenordnung von 10 V. Mit diesen Dimensionierungen der beiden Stromquellen 14, 18 läßt sich eine relativ schnelle Grobbearbeitung und eine hochgenaue Feinbearbeitung des Werkstückes erzielen.

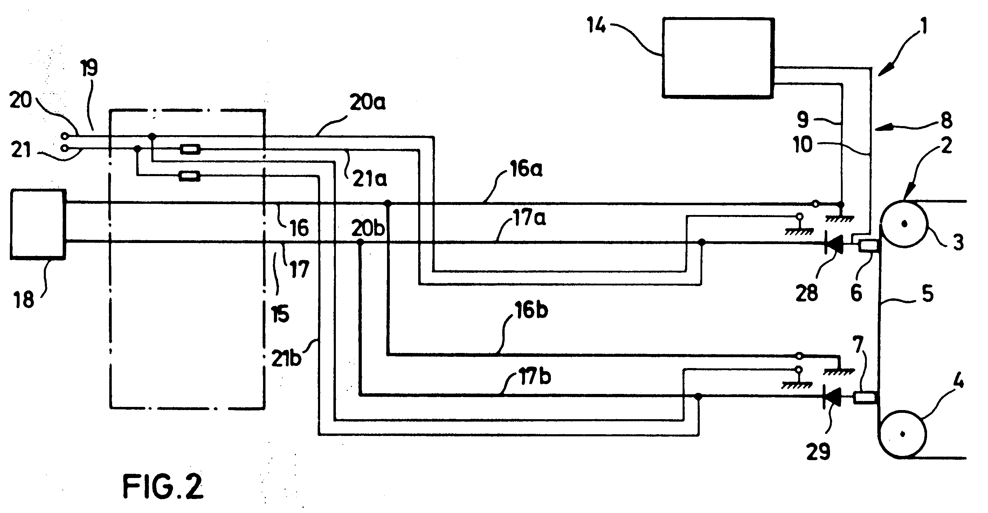

Nachfolgend wird auf die zweite Ausführungsform gemäß Fig.2 der Vorrichtung zum erosiven Werkstückbearbeiten eingegangen werden. Bezugszeichen, die mit den in Fig.1 gewählten übereinstimmen bezeichnen gleiche oder ähnliche Teile, so daß auf erneute Erläuterung dieser Teile verzichtet werden kann.

Bezugnehmend auf Fig.2 soll nunmehr die zweite Ausführungsform der erfindungsgemäßen Vorrichtung zum erosiven Werkstückbearbeiten erläutert werden. Diese zweite Ausführungsform unterscheidet sich von der in Fig.1 gezeigten Ausführungsform im wesentlichen dadurch, daß das Relais 11 mit den beweglichen Schaltkontakten 12a, 12b und der Betätigungswicklung 13 durch eine erste Diode 28 und eine zweite Diode 29 ersetzt sind, die am Ort der beiden beweglichen Schaltkontakte 12a, 12b des ersten Ausführungsbeispiels eingeschaltet sind. Die Dioden sind derart gepolt, daß sie nur in ihren leitenden Zustand geschaltet werden, wenn die Vollschnitt-Stromquelle das Vollschnittkabel 15 mit den hohen Stromimpulsen für die Grobbearbeitung beaufschlagt. Während der Feinschnittbearbeitung sind die beiden Dioden 28, 29 in ihrem gesperrten Zustand, so daß das Vollschnittkabel 15 und das Referenzkabel 19 von dem Feinschnittkabel 8 und somit von der Drahtelektrode 5 entkoppelt sind, wodurch kapazitive Störungen ausgehend von dem Vollschnittkabel und gegebenenfalls von dem Referenzkabel nicht bis zur Drahtelektrode 5 vordringen können. Anstelle der Dioden 28, 29 können jedoch auch andere halbleitende Elemente vorgesehen sein.

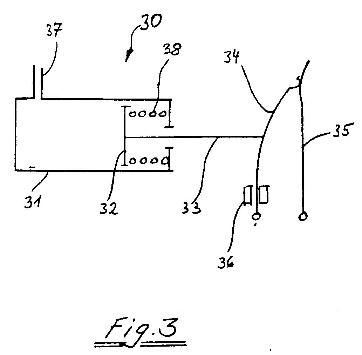

Fig. 3 zeigt schematisch einen pneumatisch oder hydraulisch betätigbaren Schalter 30, der aus einem Zylinder 31 und einem darin verschieblichen Kolben 32 besteht, wobei die Kolbenstange 33 mit einem Schaltkontakt 34 eines Kontaktpaares 34, 35 verbunden ist. Der bewegliche Kontaktarm 34 ist dabei an seinem einen Ende fest eingespannt, was mit dem Bezugszeichen 36 angedeutet ist.

Wird der Innenraum des Zylinders 31 über einen Anschluß 37 mit Druckluft beaufschlagt, so wird der Kolben 32 soweit verschoben, bis sich die Kontakte 34 und 35 berühren. Für die Erzeugung einer Rückstellkraft kann in Kolben/Zylinder-Anordnung eine Rückstellfeder 38 vorgesehen sein. Es ist jedoch auch möglich, diese Feder fortzulassen und stattdessen den Kontaktarm 34 so zu dimensionieren, daß seine Federkraft die Rückstellung des Kolbens 32 bewirkt. Da an herkömmlichen Elektroerosionsmaschinen ohnehin Druckluft für andere Zwecke vorhanden ist, wird dem Ausführungsbeispiel der Fig. 3 besonderen Vorzug gegeben.

## Patentansprüche

1. Vorrichtung zum elektroerosiven Werkstückbearbeiten mit einer Erosionselektrode (5), die über ein Vollschnittkabel (15) hohen Kapazitätsbelages mit einer ersten Stromquelle (18) zum Erzeugen eines hohen Stromes für eine Grobschnittbearbeitung des Werkstückes verbindbar ist und die über ein Feinschnittkabel (8) niedrigen Kapazitätsbelages mit einer zweiten Stromquelle (14) zum Erzeugen eines niedrigen Stromes für eine Feinbearbeitung des Werkstückes verbindbar ist, wobei das Vollschnittkabel (15) zumindest über einen Großteil seiner Länge oder in seiner Gesamtheit mehrpolig von der Erosionselektrode (5) elektrisch durch eine Trennvorrichtung (11, 12a, 12b, 13; 28, 29; 30) während der Feinbearbeitung trennbar ist,
dadurch gekennzeichnet,
daß die Trennvorrichtung als pneumatisch oder hydraulisch gesteuerter elektrischer Schalter (30) ausgebildet ist, dessen elektrische Kontakte (34, 35) nahe zu Stromzufuhrkontakten (6, 7) für die Zufuhr elektrischer Energie zur Erosionselektrode (5) angeordnet sind.

2. Vorrichtung zum elektroerosiven Werkstückbearbeiten mit einer Erosionselektrode (5), die über ein Vollschnittkabel (15) hohen Kapazitätsbelages mit einer ersten Stromquelle (18) zum Erzeugen eines hohen Stromes für eine Grobschnittbearbeitung des Werkstückes verbindbar ist und die über ein Feinschnittkabel (8) niedrigen Kapazitätsbelages mit einer zweiten Stromquelle (14) zum Erzeugen eines niedrigen Stromes für eine Feinbearbeitung des Werkstückes verbindbar ist, wobei das Vollschnittkabel (15) zumindest über einen Großteil seiner Länge oder in seiner Gesamtheit mehrpolig von der Erosionselektrode (5) elektrisch durch eine Trennvorrichtung (11, 12a, 12b, 13; 28, 29; 30) während der Feinbearbeitung trennbar ist,
dadurch gekennzeichnet,
daß die Trennvorrichtung durch ein halbleitendes Element (28, 29), insbesondere durch eine Diode gebildet ist, die zwischen dem Großteil der Länge des Vollschnittkabels (15) oder dessen Gesamtheit einerseits und der Erosionselektrode (5) andererseits liegt, und daß das halbleitende Element (28, 29) nur dann leitet, wenn das Werkstück mit dem Erosionsstrom für die Vollschnittverarbeitung durch die erste Stromquelle (18) mit Strom versorgt wird.

3. Vorrichtung zum elektroerosiven Werkstückbearbeiten mit einer Erosionselektrode (5), die über ein Vollschnittkabel (15) hohen Kapazitätsbelages mit einer ersten Stromquelle (18) zum Erzeugen eines hohen Stromes für eine Grobschnittbearbeitung des Werkstückes verbindbar ist und die über ein Feinschnittkabel (8) niedrigen Kapazitätsbelages mit einer zweiten Stromquelle (14) zum Erzeugen eines niedrigen Stromes für eine Feinbearbeitung des Werkstückes verbindbar ist, wobei das Vollschnittkabel (15) zumindest über einen Großteil seiner Länge oder in seiner Gesamtheit mehrpolig von der Erosionselektrode (5) elektrisch durch eine Trennvorrichtung (11, 12a, 12b, 13; 28, 29; 30) während der Feinbearbeitung trennbar ist,
dadurch gekennzeichnet,
daß die Trenneinrichtung als ein Relais (11, 12a, 12b, 13) ausgestaltet ist, das zwischen einem Großteil der Länge des Vollschnittkabels (15) einerseits und einem Stromzufuhrkontakt (6, 7) zur Kontaktgabe mit der Erosionselektrode (5) andererseits liegt, daß die Schaltkontakte des Relais (11, 12a, 12b, 13) beim Zuführen des niedrigen Stromes für die Feinbearbeitung geöffnet sind und daß das Feinschnittkabel (8) an den Stromzufuhrkontakten (6, 7) angeschlossen ist.

4. Vorrichtung nach einem der vorhergehenden Ansprüche,
dadurch gekennzeichnet,
daß mittels der Trennvorrichtung (11, 12a, 12b, 13; 28, 29; 30) während der Feinbearbeitung zusätzlich zur elektrischen Trennung mindestens des Großteils der Länge des Vollschnittkabels (15) ebenfalls eine elektrische Trennung eines Referenzkabels (19) von der Erosionselektrode (5) vornehmbar ist.

5. Vorrichtung nach einem der vorhergehenden Ansprüche,
dadurch gekennzeichnet,
daß die erste Stromquelle (18) Stromimpulse in der Größenordnung von 60A bei einer Leerlaufspannung in der Größenordnung von 300V und einer Betriebsspannung in der Größenordnung von 20V liefert und daß die zweite Stromquelle (14) Stromimpulse in der Größenordnung von 0,3A bis 1,0A bei einer Leerlaufspannung in der Größenordnung von 30V bis 100V und einer Brennspannung in der Größenordnung von 10V liefert.

## Claims

1. A device for machining workpieces by electro-erosion, having an erosion electrode (5) which can be connected via a full cutting cable (15) of high capacitance pet unit length to a first source of current (18) for generating a high current for rough-machining the workpiece and which can be connected via a fine cutting cable (8) of low capacitance per unit length to a second source of current (14) for generating a low current for fine-machining the workpiece, wherein the full cutting cable (15) can be electrically separated in a multi-polar manner from the erosion electrode (5) during the fine-machining process by means of a separating device (11, 12a, 12b, 13; 28, 29; 30), at least over a major part of its length or in its entirety, characterised in that the separating device is designed as a pneumatically or hydraulically controlled electric switch (30), the electrical contacts (34, 35) of which are arranged in the proximity of current supply contacts (6, 7) for the supply of electrical energy to the erosion electrode (5).

2. A device for machining workpieces by electro-erosion, having an erosion electrode (5) which can be connected via a full cutting cable (15) of high capacitance per unit length to a first source of current (18) for generating a high current for rough-machining the workpiece and which can be connected via a fine cutting cable (8) of low capacitance per unit length to a second source of current (14) for generating a low current for fine-machining the workpiece, wherein the full cutting cable (15) can be electrically separated in a multi-polar manner from the erosion electrode (5) during the fine-machining process by means of a separating device (11, 12a, 12b, 13; 28, 29; 30), at least over a major part of its length or in its entirety, oharacterised in that the separating device is formed by a semi-conducting element (28, 29), in particular by a diode which is located between the major part of the length of the full cutting cable (15) or its entirety on the one hand and the erosion electrode (5) on the other, and in that the semi-conducting element (28, 29) only conducts when the workpiece is supplied with the erosion current for the full cutting process by the first source of current (18).

3. A device for machining workpieces by electro-erosion, having an erosion electrode (5) which can be connected via a full cutting cable (15) of high capacitance per unit length to a first source of current (18) for generating a high current for rough-machining the workpiece and which can be connected via a dine cutting cable (8) of low capacitance per unit length to a second source of current (14) for generating a low current for fine-machining the workpiece, wherein the full cutting cable (15) can be electrically separated in a multi-polar manner from the erosion electrode (5) during the fine-machining process by means of a separating device (11, 12a, 12b, 13; 28, 29; 30), at least over a major part of its length or in its entirety, characterised in that the separating device is formed as a relay (11, 12a, 12b, 13) which is located between a major part of the length of the full cutting sable (15) on the one hand and a current supply contact (6, 7) for making contact with the erosion electrode (5) on the other, in that the switching contacts of the relay (11, 12a, 12b, 13) are open when the low current for fine-machining is being supplied add in that the fine cutting cable (8) is connected to the current supply contacts (6, 7).

4. A device according to any one of the preceding claims, characterised in that an electrical separation of a reference cable (19) from the erosion electrode (5) can also be carried out by means of the separating device (11, 12a, 12b, 13; 28, 29; 30) during-fine machining in addition to the electrical separation of at least the major part of the length of the full cutting cable (15).

5. A device according to any one of the preceding claims, characterised in that the first source of current (18) supplies current pulses in the order of magnitude of 60A with a no-load voltage in the order of magnitude of 300V and an operating voltage in the order of Magnitude of 20V and in that the second source of current (14) supplies current pulses in the order of magnitude of 0.3A to 1.0A with a no-load voltage in the order of magnitude of 30V to 100V and an operating voltage in the order of magnitude of 10V.

**Revendications**

1. Dispositif d'usinage de pièces à usiner par électroérosion muni d'une électrode d'érosion (5) susceptible d'être raccordée par un câble de découpage (15) à section pleine et de capacité linéique élevée, à une première source de courant (18) à grande intensité pour le découpage d'ébauche de la pièce à usiner et, par un câble de découpage de précision (8) de capacité linéique faible, à une deuxième source de courant (14) à faible intensité pour l'usinage de précision de la pièce à usiner, dans lequel le câble de découpage (15) à section pleine est susceptible d'être séparé électriquement, au moins sur la plus grande partie de sa longueur ou en totalité et sur une pluralité de pôles, de l'électrode d'érosion (5) au moyen d'un dispositif de séparation (11, 12a, 12b, 13; 28, 29; 30) pendant l'usinage de précision, caractérisé en ce que le dispositif de séparation est réalisé sous la forme d'un interrupteur électrique (30) à commande pneumatique ou hydraulique dont les contacts électriques (34, 35) sont disposés à proximité des contacts (6, 7) d'amenée de courant pour l'alimentation en énergie électrique de l'électrode d'érosion (5).

2. Dispositif d'usinage de pièces à usiner par électroérosion muni d'une électrode d'érosion (5) susceptible d'être raccordée par un câble de découpage (15) à section pleine et de capacité linéique élevée, à une première source de courant (18) à grande intensité pour le découpage d'ébauche de la pièce à usiner et, par un câble de découpage de précision (8) de capacité linéique faible, à une deuxième source de courant (14) à faible intensité pour l'usinage de précision de la pièce à usiner, dans lequel le câble de découpage (15) à section pleine est susceptible d'être séparé électriquement, au moins sur la plus grande partie de sa longueur ou en totalité et sur une pluralité de pôles, de l'électrode d'érosion (5) au moyen d'un dispositif de séparation (11, 12a, 12b, 13; 28, 29; 30) pendant l'usinage de précision, caractérisé en ce que le dispositif de séparation est composé d'un élément semi-conducteur (28, 29) en particulier une diode branchée, d'une part entre la plus grande partie de la longueur du câble de découpage (15) à section pleine ou la totalité de celui-ci et, d'autre part, l'électrode d'érosion (5), et en ce que l'élément semi-conducteur (28, 29) ne se trouve à l'état passant que lorsque la pièce à usiner est alimentée en courant par le courant d'érosion pour le découpage à pleine section par la première source de courant (18).

3. Dispositif d'usinage de pièces à usiner par électroérosion muni d'une électrode d'érosion (5) susceptible d'être raccordée par un câble de découpage (15) à section pleine et de capacité linéique élevée, à une première source de courant (18) à grande intensité pour le découpage d'ébauche de la pièce à usiner et, par un câble de découpage de précision (8) de capacité linéique faible, à une deuxième source de courant (14) à faible intensité pour l'usinage de précision de la pièce à usiner, dans lequel le câble de découpage (15) à section pleine est susceptible d'être séparé électriquement au moins sur la plus grande partie de sa longueur ou en totalité et sur une pluralité de pôles de l'électrode (5) au moyen d'un dispositif de séparation (11, 12a, 12b, 13; 28, 29; 30) pendant l'usinage de précision, caractérisé en ce que le dispositif de séparation est réalisé sous la forme d'un relais (11, 12a, 12b, 13) qui est disposé, d'une part entre la plus grande partie de la longueur du câble de découpage (18) à section pleine et, d'autre part, un contact (6, 7) d'amenée de courant pour assurer le contact avec l'électrode d'érosion (5), en ce que les contacts de commutation du relais (11, 12a, 12b, 13) sont ouverts lors de l'alimentation à faible intensité pour l'usinage de précision, et en ce que le câble de découpage (8) de précision est raccordé aux contacts (6, 7) d'amenée de courant.

4. Dispositif selon l'une des revendications précédentes, caractérisé en ce que pendant l'usinage de précision, en plus de la séparation électrique d'au moins la plus grande partie de la longueur du câble de découpage (15) à section pleine, le dispositif de séparation (11, 12a, 12b, 13; 28, 29; 30) est susceptible de réaliser également la séparation électrique entre un câble de référence (19) et l'électrode d'érosion (5).

5. Dispositif selon l'une des revendications précédentes, caractérisé en ce que la première source de courant (18) fournit des impulsions de courant de l'ordre de 60 A pour une tension à vide de l'ordre de 300 V et une tension de fonctionnement de l'ordre de 20 V, et en ce que la deuxième source de courant (14) fournit des impulsions de courant de l'ordre de 0,3 A à 1,0 A pour une tension à vide de l'ordre de 30 V à 100 V et une tension d'arc ou de décharge de l'ordre de 10 V.

FIG.1

EP 0 313 049 B1

FIG.2

EP 0 313 049 B1

_Fig.3_